Europäisches Patentamt

**European Patent Office**

Office européen des brevets

(19)

(11) Publication number: **0 135 144**
**A1**

(12) # EUROPEAN PATENT APPLICATION

(21) Application number: **84109687.8**

(22) Date of filing: **14.08.84**

(51) Int. Cl.⁴: **C 02 F 11/08**
**B 01 J 4/00**

(30) Priority: **22.08.83 US 525382**

(43) Date of publication of application:
**27.03.85 Bulletin 85/13**

(84) Designated Contracting States:
**DE FR GB NL SE**

(71) Applicant: **STERLING DRUG INC.**
**90 Park Avenue**
**New York New York(US)**

(72) Inventor: **Chowdhury, Ajit Kumar**
**4713 Mesker Street**
**Schofield Wisconsin(US)**

(74) Representative: **Baillie, Iain Cameron et al,**
**c/o Ladas & Parry Isartorplatz 5**
**D-8000 München 2(DE)**

(54) **Liquid gas injection system for wet oxidation vessel.**

(57) Means for injecting mixtures of pure oxygen or oxygen-enriched gas and inert purge liquid into wet oxidation reactors internally clad or lined with titanium comprises an outer titanium pipe and an inner concentric pipe or material less reactive than titanium in an oxygen-rich atmosphere. Oxygen-rich gas and purge liquid are passed through the inner pipe into the reactor and a liquid low in molecular oxygen and corrosiveness is passed through the outer pipe annulus into the reactor.

FIG. 1

This invention relates to a liquid gas injection system for introducing mixtures of pure oxygen or oxygen-enriched gas and inert purge liquid into wet oxidation reactors internally clad or lined with titanium and operating at elevated temperatures and pressures.

Wet oxidation is a well-known process for treatment of aqueous solutions or suspensions, and comprises liquid phase oxidation using an oxygen containing gas at elevated pressure and temperature; see for example U.S Patent 2,665,249.

Commercial use of pure oxygen or an oxygen-enriched gas in wet oxidation systems is a recent development. The potential for fires and/or explosions when using concentrated oxygen is well documented in the prior art, necessitating specific equipment and procedures to ensure safe operation. The prior art dealing with safe operation of such wet oxidation systems is limited.

Wet oxidation of some materials results in a mixture within the reactor which is highly corrosive to conventional materials of construction such as steel or the stainless steels. In such cases the reactor may be lined or clad with titanium to withstand the corrosivity of the reactor contents at the elevated temperatures and pressures. The use of pure oxygen or oxygen-enriched air generally exacerbates the corrosion problem. The design of the oxygen inlet nozzle in such a system

CASE: 2413 A

requires special consideration for the following two major reasons:

1. High corrosivity of the reactor contents necessitates that the oxygen inlet nozzle be constructed of titanium. Other conventional corrosion resistant materials such as Hastalloy C-276, Carpenter 20-Cb3 and stainless steel are unsatisfactory in exposure to the corrosive reactor contents.

2. Titanium is unsatisfactory as an oxygen inlet nozzle because exposure to oxygen-rich gas at wet oxidation temperatures and pressures may lead to spontaneous combustion of the metal and catastrophic failure. Although titanium is very corrosion resistant, it has been shown to be capable of under-going spontaneous combustion under certain conditions in the presence of oxygen and water at elevated pressures, as reported by F.E. Littman and F.M. Church in Final Report: Reactions of Titanium with Water and Aqueous Solution, Stanford Research Institute Project No. SD-2116, June 15, 1958.

This dilemma is not addressed by any of the following four publications and patent application, all of which disclose the introduction of air and/or oxygen into wet oxidation systems.

In Pradt et al U.S. Patent 4,174,280, wet oxidation of oxidizable materials which are insoluble, immiscible and difficult to suspend or emulsify in water, is performed by separately injecting the oxidizable materials into a sealed reactor as a separate concentrated stream. Air or oxygen is introduced into the reactor either as a separate stream or as a mixture with water or aqueous solution or suspension. Contact between oxidizable materials, water and oxygen occurs in the reactor, thus preventing premature oxidation of slugs of the oxidizable matter.

U.S. Patent No. 4,369,115 of Bauer discloses a method for introducing pure oxygen or an oxygen-enriched gas into the liquid within a wet oxidation reactor.

Chowdhury et al U.S. Patent No. 4,395,339, discloses methods for operating pure oxygen wet oxidation systems but does not address the specific mechanical details of the equipment.

Bauer et al U.S. Patent No. 4,384,959 discloses methods for achieving safe, relatively low oxygen concentrations in the presence of combustible materials in wet oxidation systems.

Chowdhury et al copending U.S. Patent Application Serial No. 346,646, filed February 8, 1982 discloses a nozzle which allows a mixture of oxygen and purge water to be injected into a wet oxidation reactor without being prematurely heated.

However, none of the above disclosures teach safe introduction of pure oxygen or oxygen-enriched gas into a wet oxidation reactor internally clad or lined with titanium or other metal which may burn in the presence of oxygen at wet oxidation temperatures and pressures. Apparatus for such safe introduction is not shown in any of these patents.

The present invention is an liquid-gas injection system in a titanium clad or titanium lined wet oxidation reactor which overcomes both the problem of titanium fires due to high oxygen concentrations and the problem of excessive corrosion of non-titanium materials such as Hastalloy alloy C-276, Carpenter 20-Cb-3 and the stainless steels.

In this invention pure oxygen or oxygen-enriched air and a purge liquid are conveyed in a non-titanium pipe, which itself is kept isolated from the corrosive environment in the wet oxidation reactor. The non-titanium pipe is surrounded by an outer titanium pipe creating an annular space wherein a continuous flow of liquid water or an aqueous slurry non-corrosive to the inner pipe, or other non-corrosive liquid, is maintained, simultaneously substantially preventing (a) contact of corrosive reactor contents with the corrodable non-titanium pipe and (b) contact of pure oxygen or oxygen-enriched air with the combustible titanium pipe and inner reactor wall before dilution with carbon dioxide or other inert gas within the reactor.

The present invention uses an inlet pipe assembly for injecting a mixture of pure oxygen gas or oxygen-enriched air and inert, that is, non-corrosive purge liquid into a corrosive wet oxidation mixture within a wet oxidation reactor vessel having wall or walls internally lined or clad with titanium. The inlet pipe assembly comprises:

    a. an outer pipe fabricated of titanium, passing through the reactor vessel wall, with a discharge end within the reactor vessel;

    b. an inner pipe concentric to and within the outer pipe, forming an annular space between the inner and outer pipes, with a discharge end within the reactor vessel. The inner pipe is made of material which is less reactive than titanium in an oxygen-rich atmosphere;

    c. means to maintain a continuous inflow of inert purge liquid or a mixture of pure oxygen gas or oxygen-enriched air and inert purge liquid through the inner pipe into the wet oxidation reactor vessel; and

    d. means to maintain within the annular space a continuous inflow of a second liquid low in molecular oxygen and less corrosive than said wet oxidation mixture.

<u>BRIEF DESCRIPTION OF THE DRAWINGS</u>

Figure 1 is a sideview of an embodiment of this invention wherein the inlet pipe assembly passes through the reactor vessel side wall.

Figure 2 is a sideview of a further embodiment in which the inlet pipe assembly enters the reactor vessel through its bottom.

<u>DESCRIPTION OF THE PREFERRED EMBODIMENT</u>

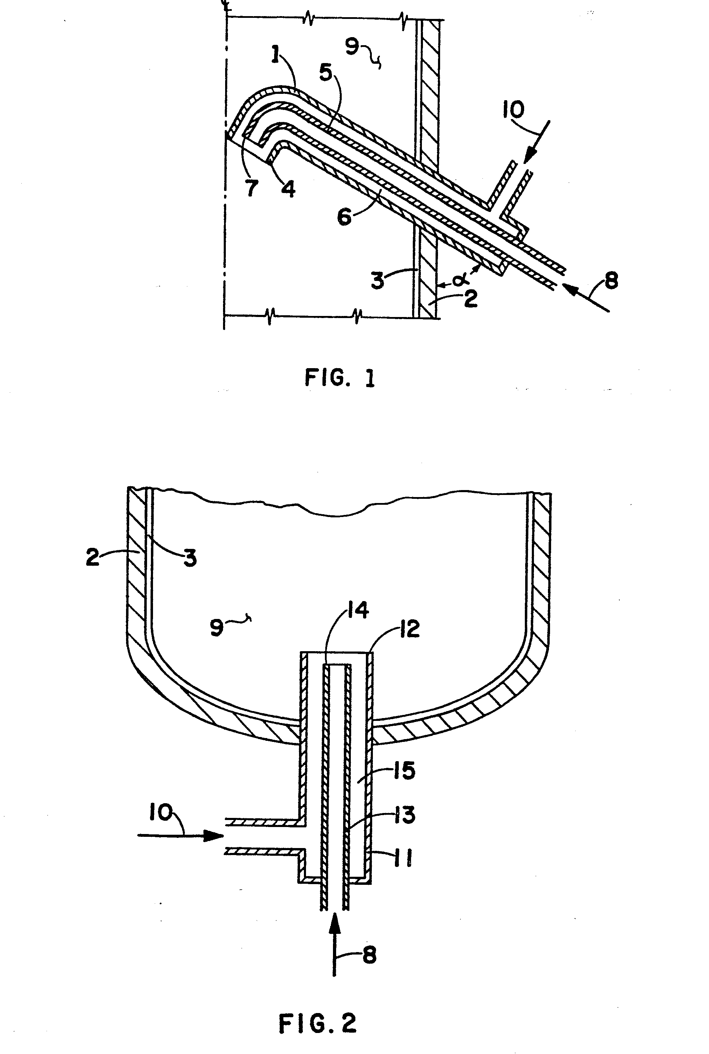

Figure 1 shows an embodiment of the present invention where the inlet pipe assembly enters the vertical wet oxidation reactor through the side wall. Although the assembly may pass through the side wall at any angle, it is preferred that the angle $\alpha$ between the inlet pipes and reactor side wall be between 45° and 90° as measured downward from their intersection on the outside of the reactor wall.

In Figure 1, outer pipe 1, fabricated of titanium, passes through reactor vessel wall 2 and liner or cladding 3 at an angle $\alpha$ and has a discharge end 4 within the reactor. Inner pipe 5 is located within outer pipe 1 and concentric to it, forming an annular space 6 between the inner and outer pipes. Inner pipe 5 is made of a material which is less reactive than titanium in an oxygen-rich atmosphere, and has a discharge end 7 coterminous or nearly coterminous with discharge end 4 of the outer pipe as further described hereinafter.

A continuous inflow 8 of an inert purge liquid or a mixture of pure oxygen gas or oxygen-enriched air and inert purge liquid is introduced into inner pipe 5 and is discharged into the reactor vessel at discharge end 7 to mix with the corrosive wet oxidation mixture 9. The oxygen introduced through pipe 5 results in oxidation of combustibles in the liquid phase within the reactor. During certain periods of operation, for example during start-up and shut-down of the wet oxidation system, it may be necessary to introduce inert purge liquid only, without any oxygen or oxygen-enriched air through the inner pipe 5. This purge liquid must be chemically non-reactive with oxygen at wet oxidation-temperatures and perferably have a vapor pressure dependence on temperature such that considerable vaporization occurs at wet oxidation temperatures to dilute the oxygen gas within the reactor. Water generally comprises the inert purge liquid. The oxygen concentration in the oxidant gas introduced in stream 8 through inner gas pipe is 25 to 100 percent, and is reactive with titanium at such high concentrations under the possible wet oxidation conditions.

A continuous aqueous stream 10 is introduced into the annular space 6 between inner pipe 5 and outer pipe 1. This stream is discharged from the discharge end 4 and mixes with inflow 8 as both streams enter the reaction zone containing wet oxidation mixture 9. The relatively cool flow 10 surrounds the flow 8 of oxidant, preventing contact of pure or concentrated oxygen with the titanium pipe 1 until sufficient mixing with the reactor contents and/or reaction has occurred. In either case, the remaining oxygen is diluted with steam and $CO_2$, eliminating the possibility of a titanium fire.

Likewise, the corrosive reaction mixture 9 is prevented from contact with corrodable inner pipe 5 by the flow of streams 8 and 10.

Thus, inner pipe 5 is protected from corrosion and outer pipe 1 is protected from burning.

The discharge ends 4 and 7 are oriented so that the flows of oxidant are directed away from the titanium vessel inner wall 3. The flow may be upward, downward, or lateral in direction.

Of course, once the streams are discharged into the reactor and are heated by the reactor contents 9, the oxygen rapidly reacts with combustibles within the reactor.

The annulus aqueous stream 10 which surrounds inner pipe 5 in this apparatus may be ordinary process water, "produced water" from heavy oil processing operations, wastewater, an aqueous slurry of the fuel to be wet oxidized, or any other aqueous stream which is a part of the wet oxidation process. Preferably the dissolved or suspended oxygen in this liquid is less than 2000 ppm.

While outer pipe 1 is fabricated of titanium, inner pipe 5 is comprised of a material less subject to combustion by concentrated oxygen, typically stainless steel, Carpenter 20-Cb3, Hastalloy C-276 or even carbon steel. Such metals are subject to rapid corrosion under the highly corrosive conditions created in the high temperature, high pressure wet oxidation reactions.

In the preferred embodiment of this invention, the distance between the discharge end of the inner pipe and the discharge end of the outer pipe, as measured along the centerline of the pipes, is less than the diameter of the outer pipe, multiplied by 2.0, and most perferably, multiplied by 0.6.

In order to prevent unwanted contact of reaction mixture 9 with the inner pipe 5, and oxygen with outer pipe 1, the velocity of liquid in stream 10 is preferably maintained at 0.25 to 20 feet per second, and more preferably at 1-10 feet per second. It is preferred that the Reynold's Number of this stream exceeds 3000.

Likewise, the flow 8 of inert purge liquid, without any concurrent gas flow, is preferably maintained at 0.25 to 15 feet per second through inner pipe 5. More preferably, the velocity is maintained at 0.5 to 5 feet per second, with a Reynold's Number of the liquid alone exceeding 3000.

In the embodiment illustrated in Figure 2, the streams 8 and 10 are introduced through the reactor bottom rather than through the sidewall. The apparatus comprises outer titanium pipe 11 having discharge end 12, and inner pipe 13 comprised of a material relatively non-reactive to oxygen. Pipe 13 has discharge end 14. Introduction of inflow 8 and stream 10 are as previously described.

The discharge ends 12 and 14 may optionally be flared inward and/or outward to achieve the desired velocities of streams 8 and 10 as they pass into and mix with reactor contents 9.

This apparatus, used as described above enables the safe introduction of concentrated oxygen into a high temperature high pressure wet oxidation reactor having reactive titanium walls, where the reaction mixture containing highly reactive fuel is also very corrosive to conventional non-titanium materials of construction.


EXAMPLE

A wet oxidation system using pure oxygen with the reactor constructed of titanium is to be operated at the following conditions:

| | |
|---|---|
| Reactor Temperature, °F | 600 |
| Reactor pressure, psig | 2,000 |
| $O_2$ Flow Rate, lbs/hr. | 8,800 |
| Purge Water Flow Rate, lbs/hr. | 2,200 |
| Annulus Water Flow Rate, lbs/hr. | 41,330 |
| Inlet Temperature of Annulus Water, °F | 60 |

The submerged oxygen nozzle is designed to enter the bottom of the reactor as follows:

1. Inner pipe for $O_2$-purge water flow
   1-1/2" diameter, Schedule 80;
   Hastelloy alloy C-276,
   Carpenter 20-Cb3 or other such material which does not burn easily in purge $O_2$;
   30 inches long.

2. Outer pipe 3" diameter, schedule 80;

titanium; 30 inches long.

Assuming an overall heat transfer coefficient of 300 BTU/(hr) (ft$^2$)(°F) between the reactor contents and the water in the annulus, the discharge temperature of water into the reactor will be approximately 69°F. The velocity of water in the annulus is about 7 ft/sec. The corresponding Reynold's Number is 54,830 which assures high turbulence in the annulus so that the inner $O_2$-purge water pipe remains completely submerged in the annulus water and is isolated from the wet oxidation reaction media.

The velocity of purge water stream alone in the inner pipe is approximately 0.8 ft/sec. with a corresponding Reynold's Number of 8,070 which will insure high turbulence in the $O_2$ inlet line so as to prevent any backflow of wet oxidation reactor contents even at zero $O_2$ flow.

# C L A I M S

1.        A liquid-gas injection system for injecting a
mixture of pure oxygen gas or oxygen-enriched air and non-corrosive
purge liquid into a corrosive wet oxidation mixture within a
wet oxidation reactor vessel having wall   or walls internally
clad or lined with titanium, characterized by an outer pipe
(1) fabricated of titanium, passing through said reactor
vessel wall (2) and having a discharge end (14) within said
reactor vessel, an inner pipe (5) concentric to and within
said outer pipe (1) to form an annular space (6) between
said inner (5) and outer pipes (1), said inner pipe (5)
being made of material which is less reactive than titanium
in an oxygen-rich atmosphere and having a discharge end (7)
within said reactor vessel, said inner pipe being connected for
continuous inflow of said non-corrosive purge liquid or a mixture of
pure oxygen gas or oxygen-enriched air and non-corrosive purge liquid
through said inner pipe, and said annular space (6) being
connected for continuous inflow of a second liquid low in
molecular oxygen and less corrosive than said wet oxidation
mixture.

2.        A system according to claim 1, characterized by the
fact that the distance between said discharge end (7) of the
inner pipe (5) and said discharge end (4) of the outer pipe
(1), as measured along the centerline of said pipes (1,5),
is less than the diameter of said outer pipe (1), multiplied
by 2.0.

3.        A system according to claim 1 or 2, characterized by
the fact that the distance between said discharge end (7) of
the inner pipe (5) and said discharge end (4) of the outer
pipe (1), as measured along the centerline of said pipes (1,5),
is less than the diameter of said outer pipe (1), multiplied
by 0.6.

4.        A system according to any one of the preceding
claims, characterized by the fact that the velocity of said
second liquid (10) in said annular space (6) is 0.25 to 20 feet per second.

5. A system according to claim 4, characterized by the fact that the velocity of said second liquid (10) in said annular space (6) is 1 to 10 feet per second.

6. A system according to any one of the preceding claims, characterized by the fact that the Reynold's Number of said second liquid (10) in said annular space (6) exceeds 3000.

7. A system according to any one of the preceding claims, characterized by the fact that said non-corrosive purge liquid (8), without any concurrent gas flow, passes at 0.25 to 15 feet per second through said inner pipe (5).

8. A system according to any one of the preceding claims, characterized by the fact that said non-corrosive purge liquid (8), without any concurrent gas flow, flows at 0.5 to 5 feet per second through said inner pipe (5).

9. A system according to any one of the preceding claims, characterized by the fact that the Reynold's Number of said inflow of non-corrosive purge liquid (8) through said inner pipe (5) exceeds 3000 when there is no concurrent gas flow through said inner pipe (5).

10. A system according to claims 1-9, characterized by the fact that said inner (5) and outer (1) pipes enter said reactor vessel through the side wall (2) of the reactor.

11. A system according to claim 10, characterized by the fact that said inner (5) and outer (1) pipes enter said reactor vessel at an angle ( ) between 45° and 90° from the vertical to direct said inflow of said liquids and gas upwardly.

12. A system according to claim 10, characterized by the fact that the discharge end of said inner and outer pipes is curved downward to direct said inflow of liquids and gas downward within said reactor vessel.

13. A system according to claims 1-9, characterized by the fact that said inner (5) and outer (1) pipes enter the bottom of said reactor vessel.

14. A system according to any one of the preceding claims, characterized by the fact that said second liquid comprises one or more of water, sewage, industrial wastewater, "produced water" from heavy oil processing and fuel slurries.

15.      A system according to any one of the preceding claims, characterized by the fact that the oxygen concentration of said oxygen gas (8) or oxygen-enriched air (8) is between 25 and 100 percent.

1 / 1

0135144

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | EP-A-0 085 961 (STERLING DRUG)<br><br>* Page 4, line 18 - page 6, line 8; page 6, lines 17-33; page 7, line 25 - page 8, line 2; page 8, lines 11-27; claims 1,7,8,12-14 *<br><br>--- | 1,10-15 | C 02 F 11/08<br>B 01 J 4/00 |
| Y | FR-A-2 498 946 (SOCIETE EUROPEENNE DE PROPULSION)<br>* Page 11, claim 1 *<br><br>--- | 1 | |
| Y | CHEMIE-INGENIEUR-TECHNIK, vol. 52, no. 12, December 1980, pages 943-951, Nürnberg, DE; H. PERKOW et al.: "Nassoxidation - Ein Beitrag zum Stand der Technik"<br>* Page 947, paragraph 6: "Werkstoffe"; page 949, right-hand column, last paragraph * | 1 | |
| | ----- | | TECHNICAL FIELDS SEARCHED (Int. Cl.4)<br><br>C 02 F<br>F 24 J<br>F 02 K<br>B 01 J |

The present search report has been drawn up for all claims

| Place of search | Date of completion of the search | Examiner |
|---|---|---|
| THE HAGUE | 22-11-1984 | TEPLY J. |